# FASCICULE DE BREVET EUROPEEN

(11) **EP 1 777 844 B1**
(45) Date de publication et mention de la délivrance du brevet: **11.06.2008**
(21) Numéro de dépôt: 06291533.5
(22) Date de dépôt: 29.09.2006
(51) Int. Cl.: H04B 10/105

(54) **Système de communication par liaison optique multiutilisateur, terminal multiutilisateur et procédé de communication associés**
Kommunikationssystem mit optischer Mehrfachbenutzerverbindung, Mehrfachbenutzerendgerät und zugehöriges Kommunikationsverfahren
Communication system by multiuser optical link, multiuser terminal and communication method therefor

(30) Priorité: 24.10.2005 FR 0510825
(43) Date de publication de la demande: 25.04.2007
(73) Titulaire: ASTRIUM SAS, 75016 Paris (FR)
(72) Inventeur: Planche, Gilles, 75016 Paris (FR)
(74) Mandataire: Bérogin, Francis

(56) Documents cités:
- EP-A- 0 325 429
- US-A1- 2005 129 406
- KATS G ET AL: "ANALYSIS OF OPTICAL COHERENCE MULTIPLEXING NETWORKS FOR SATELLITE COMMUNICATION" IEEE TRANSACTIONS ON WIRELESS COMMUNICATIONS, IEEE SERVICE CENTER, PISCATAWAY, NJ, US, vol. 3, no. 5, septembre 2004 (2004-09), pages 1444-1451, XP001227366 ISSN: 1536-1276
- KALMAR A ET AL: "Multifunctional Optical Terminals for Microsatellite Clusters - Design Tradeoffs" AEU INTERNATIONAL JOURNAL OF ELECTRONICS AND COMMUNICATIONS, ELSEVIER, JENA, DE, vol. 56, no. 4, 2002, pages 279-288, XP004959680 ISSN: 1434-8411

## Description

La présente invention est relative aux systèmes de communication par liaison optique, plus spécifiquement des systèmes multi usagers pour faire communiquer un terminal multiutilisateur avec une pluralité de terminaux utilisateurs.

Plus particulièrement, l'invention concerne un terminal multiutilisateur comportant une unité de communication par liaison optique avec une pluralité de terminaux dans une zone d'intérêt scrutée par le terminal multiutilisateur, et des moyens d'acquisition pour acquérir une première communication avec un premier terminal utilisateur adaptés pour détecter au cours de la première communication le déplacement du premier terminal utilisateur dans la zone d'intérêt, l'unité de communication effectuant la première communication entre le terminal multiutilisateur et le premier terminal utilisateur sur une première voie de communication.

Par communication par liaison optique on comprend une communication par moyens optique entre un terminal multiutilisateur, par exemple un terminal monté sur un satellite en orbite géostationnaire, et un terminal utilisateur monté sur un satellite en orbite basse. Pour mettre en oeuvre une telle communication, les deux terminaux doivent s'aligner l'un avec l'autre afin de pouvoir émettre et recevoir un faisceau de rayonnement lumineux, par exemple un rayonnement infrarouge. Le faisceau est direct, puisque aucune réflexion ou diffusion n'est possible dans un tel environnement. Il est donc impératif que les deux terminaux se pointent l'un l'autre. Une telle communication est extrêmement difficilement décelable et ne peut être facilement espionnée. En effet, il est impératif d'être dans le faisceau direct de la liaison optique pour pouvoir récupérer le signal. Or, le faisceau de communication est de l'ordre de quelques microradians. La zone éclairée par le faisceau est donc très limitée, et est environ de l'ordre de 400 mètres à 40 000Km.
Les performances d'attitude des satellites ou des aéronefs, la précision de connaissance des orbites ou des trajectoires et la précision de pointage du terminal optique déterminent la connaissance à priori de la direction du partenaire. Cette incertitude, appelée « Cône d'Incertitude », diffère de plusieurs ordres de grandeur de la divergence du faisceau optique. En effet, ce cône est de plusieurs milliers de microradians comparé à la divergence de quelques microradians du faisceau optique.
Le pointage a priori de l'antenne optique ne permet donc pas d'établir la communication entre les deux partenaires. Pour réduire l'incertitude initiale, une séquence coopérative entre les deux partenaires, appelée « Acquisition » et décrite plus loin, est requise avant de communiquer.

Dans le cadre des communications optiques conventionnelles entre un satellite en orbite basse et un satellite géostationnaire, le satellite géostationnaire est toujours l'initiateur de la communication. Celui-ci est en effet équipé d'une balise, c'est-à-dire d'un moyen d'émission d'un faisceau assez divergent, comparé avec le signal de communication, afin de couvrir une plage angulaire plus importante. En général, un tel faisceau diverge d'environ un milliradian et ne peut donc couvrir la totalité du cône d'incertitude d'une dizaine de milliradians à l'intérieur duquel le satellite utilisateur est sensé se trouver. Cette divergence est en fait limitée par la puissance disponible dans le terminal géostationnaire des sources infrarouges disponibles (quelques dizaines de Watts optiques). En conséquence, le satellite géostationnaire doit balayer le cône d'incertitude au moyen de ce faisceau orientable.

Lorsque le faisceau de balise atteint le terminal utilisateur, celui-ci recentre son optique en direction du point d'émission au moyen d'un mécanisme de pointage grossier. Puis, il commence à émettre un signal de communication vers le terminal géostationnaire, par exemple des données d'identification, ou autre. Le terminal géostationnaire détecte alors le signal en provenance du terminal utilisateur, recentre son optique en direction du point d'émission du signal au moyen d'un mécanisme de pointage grossier, et émet un signal de communication. Les deux terminaux ajustent alors le centrage au moyen d'un mécanisme de pointage fin, et le terminal relais sur le satellite géostationnaire éteint le faisceau de balise.

Cependant, un tel procédé de communication et les terminaux utilisateur et relais ne permettent que des communications point à point mono utilisateur. Néanmoins, il peut s'avérer nécessaire de communiquer avec plusieurs terminaux utilisateurs présents simultanément sur la même zone d'intérêt. Par exemple, une communication par liaison optique peut être nécessaire entre une pluralité de terminaux.

La présente invention a notamment pour but de pallier l'inconvénient d'une liaison optique point à point monoutilisateur.

A cet effet, selon l'invention, un terminal multiutilisateur du genre en question est caractérisé en ce que les moyens d'acquisition sont adaptés pour détecter une demande de communication en provenance d'un deuxième terminal alors que le terminal multiutilisateur est en cours de communication avec le premier terminal,
et en ce que le terminal multiutilisateur comprend des moyens d'affectation des terminaux pour affecter le deuxième terminal sur au moins une deuxième voie de communication.

Dans divers modes de réalisation du terminal multiutilisateur selon l'invention, on peut éventuellement avoir recours en outre à l'une et/ou à l'autre des dispositions suivantes :
- l'unité de communication est adaptée pour effectuer une pluralité de communications avec une pluralité de terminaux sur une pluralité de voies de communication, les moyens d'acquisition étant adaptés pour détecter une demande de communication en provenance d'un terminal supplémentaire, alors que le terminal utilisateur est en communication avec la pluralité de terminaux ;
- les moyens d'acquisition comprennent une unité de mesure angulaire adaptée pour estimer une différence angulaire entre le premier terminal utilisateur et le deuxième terminal utilisateur au cours du temps, la deuxième voie comprenant des moyens de compensation de la différence angulaire ;
- chaque voie de communication est définie par une longueur d'onde propre, le terminal multiutilisateur comprenant un diviseur de faisceau adapté pour partager un faisceau reçu en fonction de chacune des longueurs d'onde correspondante à chaque voie et le transmettre sur chacune des voies ;
- chaque voie de communication est définie par une polarisation d'onde propre, le terminal multiutilisateur comprenant un diviseur de faisceau adapté pour partager un faisceau reçu en fonction de la polarisation correspondante de l'onde à chaque voie et le transmettre sur chacune des voies ;
- les voies de communication sont transmises les unes après les autres, le passage d'une voie à l'autre étant effectué au bout d'un temps déterminé ;
- les voies de communication sont transmises les unes après les autres, le passage de la première voie à la deuxième étant effectué à la fin de la première communication ;
- le terminal multiutilisateur comprend de plus un mécanisme de pointage fin adapté pour poursuivre le premier terminal utilisateur durant la première communication, une position du premier terminal servant de position de référence pour les autres voies de communication ;
- chaque voie de communication comprend un récepteur pour recevoir des données selon une direction montante, un émetteur pour émettre des données dans une direction descendante, un diviseur de faisceau pour diviser le faisceau émis du faisceau reçu, et un mécanisme de pointage propre à la voie, le mécanisme de pointage étant disposé en aval par rapport au diviseur de faisceau lorsqu'on considère la direction descendante ;
- le mécanisme de pointage de chaque voie est commandé en fonction de la différence angulaire entre le premier terminal utilisateur et un terminal utilisateur correspondant à la voie considérée ;
- pour un terminal considéré ayant une vitesse déterminée, l'émission de données et la réception de données sont effectuées sur deux voies distinctes, une différence de commande des mécanismes de pointage respectifs des deux voies considérées étant fonction de ladite vitesse du terminal utilisateur déterminé (la vitesse relative des terminaux permettant d'effectuer un « pointage en avant » dans le cas de vitesses relatives élevées, par exemple si le terminal usager est monté sur un satellite en orbite basse) ;
- les moyens d'acquisition comprennent un détecteur matriciel à technologie CMOS de type Active Pixel Sensor (APS), adapté pour détecter des signaux en provenance d'un terminal utilisateur en cours de communication.

De tels terminaux peuvent être placés sur un satellite, par exemple un satellite géostationnaire, ou sur une plateforme aéroportée, par exemple sur un drone.

Par ailleurs, l'invention a également pour objet un procédé de communication par liaison optique entre un terminal multiutilisateur, ledit procédé comportant les étapes consistant à
(a) établir une communication avec un premier terminal utilisateur
(b) assurer la première communication par liaison optique sur une première voie de communication entre le terminal multiutilisateur et le terminal utilisateur, tout en détectant au cours de la première communication le déplacement du premier terminal dans une zone d'intérêt,
   caractérisé en ce que le procédé comprend de plus des étapes consistant à
(c) détecter une demande de communication en provenance d'un deuxième terminal utilisateur simultanément à l'étape (b),
(d) affecter une deuxième communication entre le terminal multiutilisateur et le deuxième terminal utilisateur sur au moins une deuxième voie de communication.

Dans divers modes de réalisation du procédé selon l'invention, on peut éventuellement avoir recours en outre à l'une et/ou à l'autre des dispositions suivantes :
- au cours de l'étape (a), on estime une différence angulaire entre le premier terminal utilisateur et le deuxième terminal utilisateur au cours du temps, et on compense la différence angulaire sur la deuxième voie ;
- on installe le terminal multiutilisateur sur un satellite géostationnaire ou une plateforme aéroportée ;
- on définit pour chaque voie de communication une longueur d'onde propre, et on partage un faisceau reçu en fonction de chacune des longueurs d'onde correspondant à chaque voie et le transmettre sur chacune des voies ;
- on définit pour chaque voie de communication une polarisation d'onde propre, et on partage un faisceau reçu en fonction de chacune des polarisations d'onde correspondant à chaque voie et le transmettre sur chacune des voies ;
- on définit pour chaque voie de communication une polarisation d'onde propre, et on partage un faisceau reçu en fonction de chacune des polarisations d'onde correspondant à chaque voie et on le transmet sur chacune des voies ;
- on transmet les voies de communication les unes après les autres, le passage d'une voie à l'autre étant effectué au bout d'un temps déterminé ;
- on transmet les voies de communication les unes après les autres, le passage de la première voie à la deuxième étant effectué à la fin de la première communication ;
- au cours de l'étape (b) on poursuit le premier terminal utilisateur durant la première communication, une position du premier terminal servant de position de référence pour les autres voies de communication ;
- on commande un mécanisme de pointage de chaque voie en fonction de la différence angulaire entre le premier terminal utilisateur et un terminal utilisateur correspondant à la voie considérée ;
- pour un terminal considéré ayant une vitesse déterminée, on affecte deux voies distinctes pour l'émission de données et la réception de données respectivement, et on commande des mécanismes de pointage respectifs des deux voies considérées de manière différente en fonction de ladite vitesse du terminal utilisateur déterminé ;
- l'étape (a) est constituée des sous-étapes suivantes :
   (a1) le terminal multiutilisateur scrute la zone d'intérêt ;
   (a2) le terminal utilisateur balaie avec un premier faisceau de signalement un cône d'incertitude ;
   (a3) le terminal multiutilisateur détecte le premier faisceau de signalement du terminal utilisateur et émet un deuxième faisceau de signalement en direction du terminal utilisateur ;
   (a4) le terminal utilisateur détecte le deuxième faisceau de signalement, arrête le premier faisceau de signalement et entame la communication en direction du terminal multiutilisateur ;
   (a5) le terminal multiutilisateur arrête le deuxième faisceau de signalement et entame la communication en direction du terminal utilisateur.

Ensuite, l'invention a également pour objet un système de communication par liaison optique comprenant un premier terminal utilisateur et un deuxième terminal utilisateur dans une zone d'intérêt,
un terminal multiutilisateur comportant une unité de communication par liaison optique, et des moyens d'acquisition pour acquérir une première communication avec un premier terminal adaptés pour détecter au cours de la première communication le déplacement du premier terminal utilisateur dans la zone d'intérêt,
l'unité de communication effectuant la première communication entre le terminal multiutilisateur et le terminal utilisateur sur une première voie de communication,
caractérisé en ce que les moyens d'acquisition sont adaptés pour détecter une demande de communication en provenance d'un deuxième terminal utilisateur au cours de la première communication,
et en ce que le terminal multiutilisateur comprend des moyens d'affectation de terminal utilisateur pour affecter le deuxième terminal sur au moins une deuxième voie de communication.

Dans divers modes de réalisation du système de communication selon l'invention, on peut éventuellement avoir recours en outre à l'une et/ou à l'autre des dispositions suivantes :
- les moyens d'acquisition comprennent une unité de mesure de différence angulaire adaptée pour estimer une différence angulaire entre le premier terminal et le deuxième terminal au cours du temps, la deuxième voie comprenant des moyens de compensation de la différence angulaire ;
- le terminal multiutilisateur comprend des moyens de surveillance de la zone d'intérêt, le terminal utilisateur comprend une balise émettant un premier faisceau orientable pour balayer un cône d'incertitude, le terminal multiutilisateur comprend des moyens de détection d'un premier faisceau de signalement du terminal utilisateur et une balise adaptée pour émettre un deuxième faisceau de signalement en direction du terminal utilisateur, le terminal utilisateur comporte des moyens de détection du deuxième faisceau de signalement ;
- le terminal multiutilisateur est disposé sur un satellite géostationnaire ou une plateforme aéroportée ;
- l'un des terminaux utilisateur est disposé sur un satellite en orbite basse ;
- l'un des terminaux utilisateur est disposé sur un aeronef volant au dessus de la zone d'intérêt ;
- chaque voie de communication est définie par une longueur d'onde propre, le terminal multiutilisateur comprenant un diviseur de faisceau adapté pour partager un faisceau reçu en fonction de chacune des longueurs d'onde correspondant à chaque voie et le transmettre sur chacune des voies, chaque terminal utilisateur étant adapté pour émettre et recevoir au moyen d'un faisceau à la longueur d'onde correspondante à la voie de communication sur laquelle il a été affecté ;
- chaque voie de communication est définie par une polarisation d'onde propre, le terminal multiutilisateur comprenant un diviseur de faisceau adapté pour partager un faisceau reçu en fonction de chacune des longueurs d'onde correspondant à chaque voie et le transmettre sur chacune des voies, chaque terminal utilisateur étant adapté pour émettre et recevoir au moyen d'un faisceau à la polarisation d'onde correspondante à la voie de communication sur laquelle il a été affecté ;
- les voies de communication sont transmises les unes après les autres, le passage d'une voie à l'autre étant effectué au bout d'un temps déterminé ;
- les voies de communication sont transmises les unes après les autres, le passage de la première voie à la deuxième étant effectué à la fin de la première communication.

Enfin, un objet de l'invention concerne un terminal utilisateur comprenant une balise pour émettre un faisceau de signalement, et adapté pour former avec un terminal multiutilisateur, un système de communication conforme à l'invention.

Grâce à ces dispositions, la base même de la communication a été modifiée. En effet, la communication optique peut maintenant être initialisée par le terminal utilisateur et non plus par le terminal multiutilisateur. Ceci permet une plus grande souplesse dans la communication et élargit les possibilités de transmission de données. De plus, l'architecture du terminal multiutilisateur permet notamment d'effectuer une communication avec une pluralité de terminaux utilisateurs à la fois. Notamment, avec des satellites utilisateurs en orbite basse ou avec des drones, ou des avions survolant la zone d'intérêt scrutée par le satellite multiutilisateur.

D'autres caractéristiques et avantages de l'invention apparaîtront au cours de la description suivante d'un de ses modes de réalisation, donné à titre d'exemple non limitatif, en regard des dessins joints.

Sur les dessins :
- la figure 1 représente de manière schématique l'architecture du plan focal d'un terminal multiutilisateur conforme à l'invention ;
- la figure 2 est un diagramme illustrant le principe du pointage en avant ;
- la figure 3 est un organigramme représentant un procédé de communication selon l'invention ;
- la figure 4 est un organigramme représentant un procédé d'acquisition de communication en lien avec le procédé de communication.

Sur les différentes figures, les mêmes références désignent des éléments identiques ou similaires.

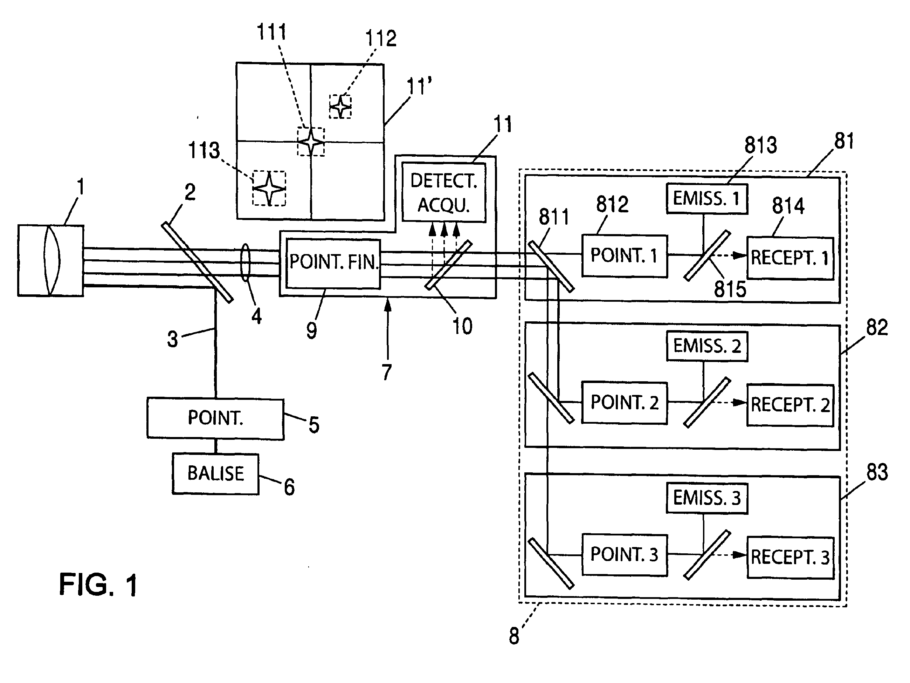

La figure 1 représente une architecture d'un terminal multiutilisateur conforme à l'invention. Ce terminal multiutilisateur est par exemple un satellite multiutilisateur, comportant un télescope 1 qui permet de transmettre une vue d'une zone à surveiller par le terminal multiutilisateur. Ce télescope 1 permet de plus de transmettre les faisceaux lumineux qui doivent être émis par le terminal multiutilisateur. Un premier diviseur de faisceaux 2 est utilisé pour séparer un faisceau de signalement 3 des autres faisceaux de communication. Un mécanisme de pointage 5 est interposé entre le diviseur de faisceaux 2 et la balise 6 afin de modifier l'orientation de la balise 6 et couvrir le champ de vue du terminal multiutilisateurs.

En effet, il est nécessaire de modifier l'orientation du faisceau de signalement 3 afin de balayer la zone à surveiller, par exemple pour établir une communication avec un terminal utilisateur en veille, ou pour signaler sa position à un terminal utilisateur ayant fait une demande de communication. Le mécanisme de balise est donc indépendant du reste des unités du terminal, notamment d'une unité d'acquisition 7 et d'une unité de communication 8.

L'unité d'acquisition 7 comprend un mécanisme de pointage fin 9 (POINT. FIN.) qui permet d'effectuer la poursuite d'un signal de communication provenant d'un terminal utilisateur, et un détecteur d'acquisition et de poursuite 11 (DETECT. ACQ.). Ce mécanisme de pointage 9 fin est commandé à haute fréquence, de l'ordre de plusieurs KiloHertz, sur la base des signaux détectés par le détecteur d'acquisition et de poursuite 11. Une régulation est donc effectuée avec ces deux éléments afin de stabiliser la position relative d'un terminal partenaire sur l'image détectée par le détecteur d'acquisition 11. Ainsi, on assure la bonne transmission des faisceaux de communication 4 à l'unité de communication, comme nous allons le décrire par la suite. Une variante d'architecture consiste à séparer les fonctions d'acquisition et de poursuite sur deux senseurs différents.

Par ailleurs, le détecteur d'acquisition est adapté pour détecter un faisceau de signalement en provenance d'un utilisateur, même au cours d'une communication précédemment établie. Pour cela, on peut utiliser un détecteur matriciel qui permet d'effectuer un fenêtrage, par exemple un détecteur APS (Active Pixel Sensor). On délimite donc une fenêtre 111, 112, 113 respectivement autour du pont d'incidence de chaque faisceau de communication, chaque fenêtre étant surveillée et déplacée de sorte que le point d'incidence du faisceau de communication considéré reste dans sa fenêtre afin de transmettre des données sur la position de chacun des faisceaux sur le capteur illustré par sa représentation référencée 11'. En cours de communication, le détecteur d'acquisition peut détecter un nouveau faisceau incident sur le détecteur d'acquisition 11, afin d'en fournir ces coordonnées aux différentes unités du terminal multiutilisateur.

En conséquence, il est possible de détecter une demande de communication provenant d'un nouvel utilisateur. Cette nouvelle demande pourra être traitée ensuite simultanément à une communication déjà établie entre le terminal multiutilisateur et un terminal utilisateur.

Un diviseur de faisceaux 10 permet de fournir une partie du faisceau incident d'une part à l'unité de communication 8 et d'autre part au détecteur d'acquisition 11.

Par ailleurs, l'unité de communication 8 du terminal multiutilisateur comprend une pluralité de voies de communication, par exemple trois voies 81, 82 et 83, comme représenté sur la figure 1. Le nombre de voies n'est évidemment pas limité à trois et peut être étendu en fonction de la largeur de bande passante, et de l'architecture du terminal multiutilisateur. Chacune de ces voies de communication 81 à 83 peut comporter respectivement un diviseur de faisceau 811 adapté pour ne transmettre à la voie que le faisceau la concernant, et rediriger les autres faisceaux de communication vers les autres voies.

Chaque voie comporte par exemple un mécanisme de pointage 812 (POINT. 1) qui permet de compenser le décalage angulaire détecté par le détecteur d'acquisition 11 pour le terminal de la voie concernée. Ce décalage correspond environ à la position de la fenêtre 111 à 113 dédiée à la voie correspondante. Dans certaines réalisations, le terminal multiutilisateur recentre au moyen de son dispositif de pointage fin 9 l'un des signaux de communication, par exemple celui de la voie 1 pour le considérer comme une référence. Cependant, il est également possible de garder une zone à surveiller fixe, et de compenser d'un angle sur toutes les voies de communication au moyen de chaque mécanisme de compensation.

Ensuite, chaque voie peut comprendre un dispositif d'émission 813 (EMISS. 1) qui émet le signal de données d'émission en direction du terminal utilisateur de la voie 1. Parallèlement, un dispositif de réception 814 (RECEPT. 1) reçoit les données provenant du terminal de la voie 1. Un diviseur de faisceaux 815 divise le faisceau de communication de la voie et le répartit entre le dispositif de réception et le dispositif d'émission.

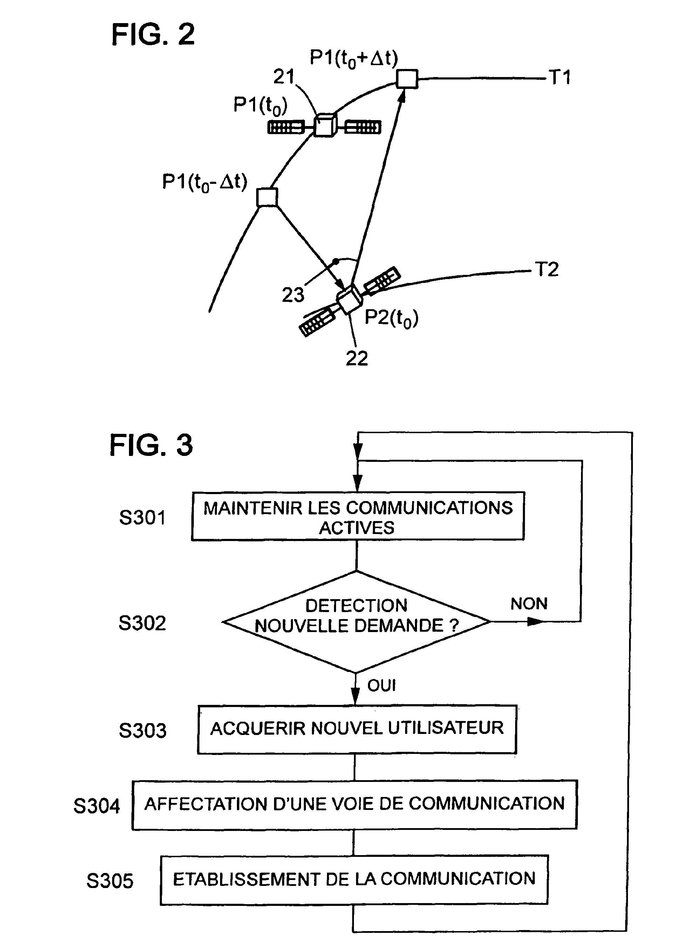

Cependant, dans le cadre de communication avec des objets se déplaçant à grande vitesse, comme des satellites en orbite basse, il est nécessaire de prendre en compte la durée de la propagation de la lumière. Pour cela, on utilise un principe de pointage en avant. Comme illustré à la figure 2, un satellite multiutilisateur 22 communique avec un satellite utilisateur 21. Le satellite multiutilisateur 22 se déplace sur une trajectoire T2, tandis que le satellite utilisateur 21 se déplace sur une trajectoire T1. Les positions du satellite utilisateur sont représentés à trois instants différents : t0-Δt, t0 et t0+Δt. A l'instant t0, le terminal multiutilisateur 22 reçoit les signaux de communication émis par le terminal utilisateur 21 à t0-Δt. Au même instant, le terminal multiutilisateur envoie des signaux de communication en destination du terminal utilisateur 21. Le terminal utilisateur ne recevra ces données qu'à l'instant t0+Δt, le terminal multiutilisateur doit donc envoyer ces données dans une direction différente de la direction d'émission. On appelle angle de pointage en avant l'angle 23 existant entre la direction de réception à l'instant t0 et la direction d'émission au même instant. Cet angle 23 est fonction de la vitesse relative des deux partenaires (satellite relais et satellite ou aéronef utilisateur). Dans le cas d'un satellite en orbite basse, la vitesse du satellite est de l'ordre de 25 000 km/h alors que la vitesse d'un aéronef reste inférieure à 1000 km/h lors des communications. Les valeurs de pointage en avant dans ces deux cas sont d'environ 70 microradians et 20 microradians. Il est donc nécessaire de prendre en compte cet angle pour obtenir la précision de pointage du microradian requise.

Cependant, le mécanisme de pointage 811, 821 ou 831 étant sur la voie commune d'émission et de réception, cet angle est aussi appliqué sur le récepteur de communication et induit une erreur d'alignement potentiellement préjudiciable à la collection de l'énergie du signal. Dans la présente invention le champ de vue du récepteur est dimensionné pour intégrer l'erreur d'alignement liée à la commande de pointage en avant des aéronefs mais ne peut prendre en compte les angles de pointage en avant plus importants des satellites en orbite basse (limitation de la puissance de fond parasite).

Dans le cas d'un utilisateur monté sur satellite en orbite basse, au lieu d'attribuer une unique voie de communication bidirectionnelle à un terminal utilisateur, on attribue une voie descendante et une voie montante sur deux voies distinctes. Par exemple, sur la figure 1, la voie 81 peut être attribuée à la voie montante, tandis que la voie 82 peut être attribuée à la voie descendante. Les mécanismes de pointage de chacune des voies sont dans ce cas commandés de manières légèrement distinctes. La différence de commande correspond au pointage en avant qui est effectué. Dans le cas de communications avec des drones ou des avions, il est possible de négliger ce pointage en avant tant leur vitesse est faible en comparaison. On obtient ainsi un terminal multiutilisateur adapté pour tous types de terminaux utilisateurs.

La communication entre le terminal multiutilisateur et des terminaux utilisateurs est illustrée notamment à la figure 3. Le terminal multiutilisateur maintient tout d'abord l'ensemble des communications non terminées actives (S301). Pour cela, le détecteur d'acquisition 11 de la figure 1 signale au contrôleur du mécanisme de pointage fin 9 le déplacement de l'ensemble des terminaux utilisateurs en cours de communication. Celui-ci utilise un principe de fenêtrage évoqué précédemment. Par exemple, le détecteur d'acquisition est un détecteur matriciel qui ne fournit à une unité de traitement que des informations concernant les fenêtres déjà existantes. Ces informations peuvent permettre de déterminer si un terminal utilisateur s'est déplacé dans la fenêtre, auquel cas il est nécessaire de modifier le fenêtrage en conséquence, ou encore de déterminer si un terminal utilisateur a arrêté de transmettre, auquel cas, on peut éliminer la fenêtre concernée et libérer la voie de communication allouée à ce terminal utilisateur.

En cours de communication et à intervalles réguliers, le terminal multiutilisateur, au moyen du détecteur d'acquisition 11 cherche une nouvelle communication (S302). A ce moment précis, le détecteur d'acquisition 11 fournit des informations à une unité de traitement non représentée concernant les pixels qui n'appartiennent à aucune des fenêtres créées. Si un faisceau de balise est détecté, alors le satellite multiutilisateur lance une étape d'acquisition S303, explicitée plus en détail par la suite. Un nouveau terminal utilisateur est alors affecté sur une voie de communication S304. Comme on l'a vu précédemment, un nouvel utilisateur peut être affecté sur deux voies, l'une étant consacrée aux données montantes, l'autre aux données descendantes, notamment dans le cas de satellites en orbite basse.

Les voies peuvent être différenciées suivant plusieurs principes. Selon une première forme de réalisation du système de communication, les voies sont transmises ensemble par multiplexage fréquentiel. Cela signifie que lors de l'étape S304, on attribue à une voie une longueur d'onde qui devra être utilisée tout au long de la communication. Dans un tel cas, le diviseur de faisceaux 811 de la voie est un miroir qui réfléchit toutes les longueurs d'onde différentes de la longueur d'onde de la voie 1. Toutes les communications des voies peuvent donc être effectuées simultanément. Ce type de transmission peut être remplacé ou utilisé en combinaison avec l'utilisation de la polarisation du faisceau. En fait, pour une voie considérée, une orientation de la polarisation est choisie. Cela permet par exemple d'au moins doubler la capacité de la bande passante du réseau de communication.

Selon une deuxième forme de réalisation du système de communication, on utilise cette fois un multiplexage temporel. Cela signifie que les voies de communication émettent et reçoivent des données chacune à leur tour. Dans une telle configuration, la communication est effectuée sur la voie 1 pendant un temps définie. Puis, la voie 2 prend la main et la communication est effectuée sur cette voie. Si la voie 1 doit encore communiquer, celle-ci reprendra la main par la suite. Il est possible que pour la reprise de chacune des communications, une étape d'acquisition soit nécessaire. Cependant, on peut également imaginer que le terminal utilisateur soit contraint d'émettre en permanence un signal sans données afin de faciliter la réacquisition du terminal utilisateur. Le terminal multiutilisateur peut ainsi diriger directement son faisceau de communication lors de la reprise de la main. En conséquence, lors de l'étape d'affectation d'une voie S304, le terminal multiutilisateur sélectionne la voie de communication grâce à la longueur d'onde/polarisation du faisceau optique.

Une fois la voie affectée, la communication est établie S305 par le terminal multiutilisateur. Le processus peut revenir à son point de départ jusqu'à la prochaine détection d'un utilisateur.

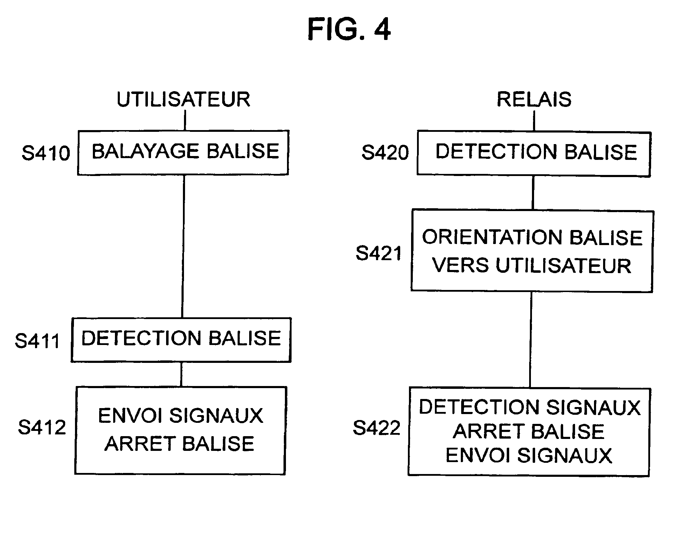

La figure 4 illustre le procédé d'acquisition d'une communication de l'étape S303 entre un terminal multiutilisateur et un terminal utilisateur. Lorsque un utilisateur souhaite entre en communication avec un terminal multiutilisateur, l'utilisateur allume sa balise et balaie la zone dans laquelle doit se trouver le terminal multiutilisateur (S410). Lorsque le faisceau de signalement émis par la balise du terminal utilisateur atteint le terminal multiutilisateur, ce dernier détecte le faisceau et estime la position du terminal utilisateur (S420). Ensuite, le terminal multiutilisateur allume à son tour sa balise et l'oriente en direction du terminal utilisateur afin de lui signaler sa présence et sa disponibilité (S421). En effet, si le terminal multiutilisateur ne pouvait acquérir de communication supplémentaire, il pourrait tout simplement ne pas répondre à cette demande.

En réponse à la réception du faisceau de signalement de balise (S411), le terminal utilisateur débute la communication et arrête sa propre balise (S412). Une fois les premières données de communication reçues par le terminal multiutilisateur, celui-ci arrête également sa balise et répond au terminal utilisateur (S422).

Une telle acquisition est rapide et permet à l'utilisateur d'être actif. Ainsi, le terminal utilisateur peut initier la communication, ce qui rend la communication par liaison optique souple et flexible.

## Revendications

1. Terminal multiutilisateur comportant une unité de communication (8) par liaison optique avec une pluralité de terminaux dans une zone d'intérêt scrutée par le terminal multiutilisateur, et des moyens d'acquisition (7) pour acquérir une première communication avec un premier terminal utilisateur adaptés pour détecter au cours de la première communication le déplacement du premier terminal utilisateur dans la zone d'intérêt,
l'unité de communication (8) effectuant la première communication entre le terminal multiutilisateur et le premier terminal utilisateur sur une première voie de communication (81),
**caractérisé en ce que** les moyens d'acquisition (7) sont adaptés pour détecter une demande de communication en provenance d'un deuxième terminal alors que le terminal multiutilisateur est en cours de communication avec le premier terminal,
et **en ce que** le terminal multiutilisateur comprend des moyens d'affectation des terminaux pour affecter une deuxième communication avec le deuxième terminal sur au moins une deuxième voie de communication (82, 83).

2. Terminal multiutilisateur selon la revendication 1, dans lequel l'unité de communication (8) est adaptée pour effectuer une pluralité de communications avec une pluralité de terminaux sur une pluralité de voies (81, 82, 83) de communication, les moyens d'acquisition (7) étant adaptés pour détecter une demande de communication en provenance d'un terminal supplémentaire, alors que le terminal utilisateur est en communication avec la pluralité de terminaux.

3. Terminal multiutilisateur selon la revendication 1 ou la revendication 2, dans lequel les moyens d'acquisition comprennent une unité de mesure angulaire (11) adaptée pour estimer une différence angulaire entre le premier terminal utilisateur et le deuxième terminal utilisateur au cours du temps, la deuxième voie comprenant des moyens de compensation de la différence angulaire.

4. Terminal multiutilisateur selon l'une quelconque des revendications précédentes, dans lequel chaque voie de communication est définie par une longueur d'onde propre, le terminal multiutilisateur comprenant un diviseur de faisceau (811) adapté pour partager un faisceau reçu en fonction de chacune des longueurs d'onde correspondante à chaque voie et le transmettre sur chacune des voies.

5. Terminal multiutilisateur selon l'une quelconque des revendications précédentes, dans lequel chaque voie de communication est définie par une polarisation d'onde propre, le terminal multiutilisateur comprenant un diviseur de faisceau (811) adapté pour partager un faisceau reçu en fonction de la polarisation correspondante de l'onde à chaque voie et le transmettre sur chacune des voies.

6. Terminal multiutilisateur selon l'une quelconque des revendications précédentes, dans lequel les voies de communication sont transmises les unes après les autres, le passage d'une voie à l'autre étant effectué au bout d'un temps déterminé.

7. Terminal multiutilisateur selon l'une quelconque des revendications 1 à 5, dans lequel les voies de communication sont transmises les unes après les autres, le passage de la première voie à la deuxième étant effectué à la fin de la première communication.

8. Terminal multiutilisateur selon l'une quelconque des revendications précédentes, comprenant de plus un mécanisme de pointage fin (9) adapté pour poursuivre le premier terminal utilisateur durant la première communication, une position du premier terminal servant de position de référence pour les autres voies de communication.

9. Terminal multiutilisateur selon l'une quelconque des revendications précédentes, dans lequel chaque voie de communication comprend un récepteur (814) pour recevoir des données selon une direction montante, un émetteur (813) pour émettre des données dans une direction descendante, un diviseur de faisceau (815) pour diviser le faisceau émis du faisceau reçu, et un mécanisme de pointage (812) propre à la voie, le mécanisme de pointage étant disposé en aval par rapport au diviseur de faisceau lorsqu'on considère la direction descendante.

10. Terminal multiutilisateur selon la revendication 9, prise en combinaison avec la revendication 3, dans lequel le mécanisme de pointage (812) de chaque voie est commandé en fonction de la différence angulaire entre le premier terminal utilisateur et un terminal utilisateur correspondant à la voie considérée.

11. Terminal multiutilisateur selon la revendication 10, dans lequel pour un terminal utilisateur déterminé ayant une vitesse déterminée, l'émission de données et la réception de données sont effectuées sur deux voies distinctes, une différence de commande des mécanismes de pointage respectifs des deux voies considérées étant fonction de ladite vitesse du terminal utilisateur déterminé.

12. Terminal multiutilisateur selon l'une quelconque des revendications précédentes, dans lequel les moyens d'acquisition comprennent un détecteur matriciel à technologie CMOS de type Active Pixel Sensor (APS), adapté pour détecter des signaux en provenance d'un terminal utilisateur en cours de communication.

13. Satellite comprenant un terminal multiutilisateur selon l'une quelconque des revendications précédentes.

14. Plateforme aéroportée comprenant un terminal multiutilisateur selon l'une quelconque des revendications 1 à 12.

15. Procédé de communication par liaison optique entre un terminal multiutilisateur, ledit procédé comportant les étapes consistant à
(a) établir une communication avec un premier terminal utilisateur
(b) assurer la première communication par liaison optique sur une première voie de communication entre le terminal multiutilisateur et le terminal utilisateur, tout en détectant au cours de la première communication le déplacement du premier terminal dans une zone d'intérêt, **caractérisé en ce que** le procédé comprend de plus des étapes consistant à
(c) détecter une demande de communication en provenance d'un deuxième terminal utilisateur simultanément à l'étape (b),
(d) affecter une deuxième communication entre le terminal multiutilisateur et le deuxième terminal utilisateur sur au moins une deuxième voie de communication.

16. Procédé selon la revendication 15, suivant lequel au cours de l'étape (a), on estime une différence angulaire entre le premier terminal utilisateur et le deuxième terminal utilisateur au cours du temps, et on compense la différence angulaire sur la deuxième voie.

17. Procédé selon la revendication 15 ou 16, suivant lequel on installe le terminal multiutilisateur sur un satellite géostationnaire ou une plateforme aéroportée.

18. Procédé selon l'une quelconque des revendications 15 à 17, suivant lequel on définit pour chaque voie de communication une longueur d'onde propre, et on partage un faisceau reçu en fonction de chacune des longueurs d'onde correspondant à chaque voie et le transmettre sur chacune des voies.

19. Procédé selon l'une quelconque des revendications 15 à 18, suivant lequel on définit pour chaque voie de communication une polarisation d'onde propre, et on partage un faisceau reçu en fonction de chacune des polarisations d'onde correspondant à chaque voie et le transmettre sur chacune des voies.

20. Procédé selon l'une quelconque des revendications 15 à 19, suivant lequel on définit pour chaque voie de communication une polarisation d'onde propre, et on partage un faisceau reçu en fonction de chacune des polarisations d'onde correspondant à chaque voie et on le transmet sur chacune des voies.

21. Procédé selon l'une quelconque des revendications 15 à 20, suivant lequel on transmet les voies de communication les unes après les autres, le passage d'une voie à l'autre étant effectué au bout d'un temps déterminé.

22. Procédé selon l'une quelconque des revendications 15 à 21, suivant lequel on transmet les voies de communication les unes après les autres, le passage de la première voie à la deuxième étant effectué à la fin de la première communication.

23. Procédé selon l'une quelconque des revendications 15 à 22, suivant lequel au cours de l'étape (b) on poursuit le premier terminal utilisateur durant la première communication, une position du premier terminal servant de position de référence pour les autres voies de communication.

24. Procédé selon l'une quelconque des revendications 15 à 23, prise en combinaison avec la revendication 16, suivant lequel on commande un mécanisme de pointage (812) de chaque voie en fonction de la différence angulaire entre le premier terminal utilisateur et un terminal utilisateur correspondant à la voie considérée.

25. Procédé selon la revendication 24, suivant lequel pour un terminal utilisateur déterminé ayant une vitesse déterminée, on affecte deux voies distinctes pour l'émission de données et la réception de données respectivement, et on commande des mécanismes de pointage (812) respectifs des deux voies considérées de manière différente en fonction de ladite vitesse du terminal utilisateur déterminé.

26. Procédé selon l'une quelconque des revendications 15 à 25, suivant lequel l'étape (a) est constituée des sous-étapes suivantes :
(a1) le terminal multiutilisateur scrute la zone d'intérêt ;
(a2) le terminal utilisateur balaie avec un premier faisceau de signalement un cône d'incertitude ;
(a3) le terminal multiutilisateur détecte le premier faisceau de signalement du terminal utilisateur et émet un deuxième faisceau de signalement en direction du terminal utilisateur ;
(a4) le terminal utilisateur détecte le deuxième faisceau de signalement, arrête le premier faisceau de signalement et entame la communication en direction du terminal multiutilisateur ;
(a5) le terminal multiutilisateur arrête le deuxième faisceau de signalement et entame la communication en direction du terminal utilisateur.

27. Système de communication par liaison optique comprenant un premier terminal utilisateur et un deuxième terminal utilisateur dans une zone d'intérêt,
un terminal multiutilisateur comportant une unité de communication (8) par liaison optique, et des moyens d'acquisition (7) pour acquérir une première communication avec un premier terminal adaptés pour détecter au cours de la première communication le déplacement du premier terminal utilisateur dans la zone d'intérêt,
l'unité de communication effectuant la première communication entre le terminal multiutilisateur et le terminal utilisateur sur une première voie de communication (81),
**caractérisé en ce que** les moyens d'acquisition sont adaptés pour détecter une demande de communication en provenance du deuxième terminal utilisateur au cours de la première communication,
et **en ce que** le terminal multiutilisateur comprend des moyens d'affectation de terminal utilisateur pour affecter une deuxième communication avec le deuxième terminal sur au moins une deuxième voie de communication (82).

28. Système de communication selon la revendication 27, dans lequel les moyens d'acquisition comprennent une unité de mesure de différence angulaire adaptée pour estimer une différence angulaire entre le premier terminal et le deuxième terminal au cours du temps, la deuxième voie comprenant des moyens de compensation de la différence angulaire.

29. Système de communication selon la revendication 27 ou la revendication 28, dans lequel
le terminal multiutilisateur comprend des moyens de surveillance de la zone d'intérêt (11) ;
le terminal utilisateur comprend une balise émettant un premier faisceau orientable pour balayer un cône d'incertitude ;
le terminal multiutilisateur comprend des moyens de détection d'un premier faisceau de signalement du terminal utilisateur et une balise (6) adaptée pour émettre un deuxième faisceau de signalement en direction du terminal utilisateur ;
le terminal utilisateur comporte des moyens de détection du deuxième faisceau de signalement.

30. Système de communication selon l'une quelconque des revendications 27 à 29, dans lequel le terminal multiutilisateur est disposé sur un satellite géostationnaire ou une plateforme aéroportée.

31. Système de communication selon l'une quelconque des revendications 27 à 30, dans lequel l'un des terminaux utilisateur est disposé sur un satellite en orbite basse.

32. Système de communication selon l'une quelconque des revendications 27 à 31, dans lequel l'un des terminaux utilisateur est disposé sur un aeronef volant au dessus de la zone d'intérêt.

33. Système de communication selon l'une quelconque des revendications 27 à 32, dans lequel chaque voie de communication est définie par une longueur d'onde propre, le terminal multiutilisateur comprenant un diviseur de faisceau (811) adapté pour partager un faisceau reçu en fonction de chacune des longueurs d'onde correspondant à chaque voie et le transmettre sur chacune des voies,
chaque terminal utilisateur étant adapté pour émettre et recevoir au moyen d'un faisceau à la longueur d'onde correspondante à la voie de communication sur laquelle il a été affecté.

34. Système de communication selon l'une quelconque des revendications 27 à 33, dans lequel chaque voie de communication est définie par une polarisation d'onde propre, le terminal multiutilisateur comprenant un diviseur de faisceau (811) adapté pour partager un faisceau reçu en fonction de chacune des longueurs d'onde correspondant à chaque voie et le transmettre sur chacune des voies, chaque terminal utilisateur étant adapté pour émettre et recevoir au moyen d'un faisceau à la polarisation d'onde correspondante à la voie de communication sur laquelle il a été affecté.

35. Système de communication selon l'une quelconque des revendications 27 à 34, dans lequel les voies de communication sont transmises les unes après les autres, le passage d'une voie à l'autre étant effectué au bout d'un temps déterminé.

36. Système de communication selon l'une quelconque des revendications 27 à 34, dans lequel les voies de communication sont transmises les unes après les autres, le passage de la première voie à la deuxième étant effectué à la fin de la première communication.

37. Satellite comprenant un terminal utilisateur comportant une balise pour émettre un faisceau de signalement, et adapté pour former avec un terminal multiutilisateur, un système de communication selon l'une quelconque des revendications 27 à 36.

## Claims

1. Multi-user terminal comprising a unit (8) for communicating by optical link with a plurality of terminals in an area of interest scanned by the multi-user terminal, and acquisition means (7) for acquiring a first communication with a first user terminal suitable for detecting during the first communication the movement of the first user terminal within the area of interest,
the communication unit (8) making the first communication between the multi-user terminal and the first user terminal on a first communication channel (81),
**characterized in that** the acquisition means (7) are suitable for detecting a communication request originating from a second terminal when the multi-user terminal is communicating with the first terminal,
and **in that** the multi-user terminal comprises terminal assignment means for assigning a second communication with the second terminal on at least one second communication channel (82, 83).

2. Multi-user terminal according to Claim 1, in which the communication unit (8) is suitable for making a plurality of communications with a plurality of terminals on a plurality of communication channels (81, 82, 83), the acquisition means (7) being suitable for detecting a communication request originating from an additional terminal, when the user terminal is communicating with the plurality of terminals.

3. Multi-user terminal according to Claim 1 or Claim 2, in which the acquisition means comprise an angle measuring unit (11) suitable for estimating an angular difference between the first user terminal and the second user terminal over time, the second channel comprising means of neutralizing the angular difference.

4. Multi-user terminal according to any one of the preceding claims, in which each communication channel is defined by a specific wavelength, the multi-user terminal comprising a beam splitter (811) suitable for dividing up a received beam according to each of the wavelengths corresponding to each channel and transmitting it on each of the channels.

5. Multi-user terminal according to any one of the preceding claims, in which each communication channel is defined by a specific wave polarization, the multi-user terminal comprising a beam splitter (811) suitable for dividing up a received beam according to the corresponding polarization of the wave on each channel and transmitting it on each of the channels.

6. Multi-user terminal according to any one of the preceding claims, in which the communication channels are transmitted one after the other, the transition from one channel to the other being made after a determined time.

7. Multi-user terminal according to any one of Claims 1 to 5, in which the communication channels are transmitted one after the other, the transition from the first channel to the second being made at the end of the first communication.

8. Multi-user terminal according to any one of the preceding claims, also comprising a fine pointing mechanism (9) suitable for following the first user terminal during the first communication, a position of the first terminal serving as a reference position for the other communication channels.

9. Multi-user terminal according to any one of the preceding claims, in which each communication channel comprises a receiver (814) for receiving data in an uplink direction, a transmitter (813) for transmitting data in a downlink direction, a beam splitter (815) for splitting the transmitted beam from the received beam, and a pointing mechanism (812) specific to the channel, the pointing mechanism being positioned downstream relative to the beam splitter in the downlink direction.

10. Multi-user terminal according to Claim 9, taken in conjunction with Claim 3, in which the pointing mechanism (812) of each channel is controlled according to the angular difference between the first user terminal and a user terminal corresponding to the channel concerned.

11. Multi-user terminal according to Claim 10, in which, for a determined user terminal having a determined speed, data transmission and data reception are performed on two separate channels, a control difference in the respective pointing mechanisms of the two channels concerned being dependent on said speed of the determined user terminal.

12. Multi-user terminal according to any one of the preceding claims, in which the acquisition means comprise a CMOS technology matrix detector of active pixel sensor (APS) type, suitable for detecting signals originating from a user terminal currently communicating.

13. Satellite comprising a multi-user terminal according to any one of the preceding claims.

14. Airborne platform comprising a multi-user terminal according to any one of Claims 1 to 12.

15. Method of communicating by optical link between a multi-user terminal, said method comprising steps consisting in
(a) setting up a communication with a first user terminal
(b) handling the first communication by optical link on a first communication channel between the multi-user terminal and the user terminal, while detecting during the first communication the movement of the first terminal in an area of interest,
**characterized in that** the method also comprises steps consisting in
(c) detecting a communication request originating from a second user terminal simultaneously with step (b),
(d) assigning a second communication between the multi-user terminal and the second user terminal to at least one second communication channel.

16. Method according to Claim 15, according to which, during the step (a), an angular difference between the first user terminal and the second user terminal over time is estimated, and the angular difference is neutralized on the second channel.

17. Method according to Claim 15 or 16, according to which the multi-user terminal is installed on a geostationary satellite or on an airborne platform.

18. Method according to any one of Claims 15 to 17, according to which a specific wavelength is defined for each communication channel, and a received beam is divided up according to each of the wavelengths corresponding to each channel and transmitted on each of the channels.

19. Method according to any one of Claims 15 to 18, according to which a specific wave polarization is defined for each communication channel, and a received beam is divided up according to each of the wave polarizations corresponding to each channel and transmitted on each of the channels.

20. Method according to any one of Claims 15 to 19, according to which a specific wave polarization is defined for each communication channel, and a received beam is divided up according to each of the wave polarizations corresponding to each channel and transmitted on each of the channels.

21. Method according to any one of Claims 15 to 20, according to which the communication channels are transmitted one after the other, the transition from one channel to another being made after a determined time.

22. Method according to any one of Claims 15 to 21, according to which the communication channels are transmitted one after the other, the transition from the first channel to the second being made at the end of the first communication.

23. Method according to any one of Claims 15 to 22, according to which, during the step (b), the first user terminal is followed during the first communication, a position of the first terminal serving as a reference position for the other communication channels.

24. Method according to any one of Claims 15 to 23, taken in conjunction with Claim 16, according to which a pointing mechanism (812) of each channel is controlled according to the angular difference between the first user terminal and a user terminal corresponding to the channel concerned.

25. Method according to Claim 24, according to which, for a determined user terminal having a determined speed, two separate channels are assigned respectively for transmitting data and receiving data, and respective pointing mechanisms (812) for the two channels concerned are controlled in different ways according to said speed of the determined user terminal.

26. Method according to any one of Claims 15 to 25, according to which the step (a) comprises the following substeps:
(a1) the multi-user terminal scans the area of interest;
(a2) the user terminal uses a first signalling beam to sweep a cone of uncertainty;
(a3) the multi-user terminal detects the first signalling beam from the user terminal and transmits a second signalling beam towards the user terminal;
(a4) the user terminal detects the second signalling beam, stops the first signalling beam and begins the communication towards the multi-user terminal;
(a5) the multi-user terminal stops the second signalling beam and begins the communication towards the user terminal.

27. System for communicating by optical link comprising a first user terminal and a second user terminal in an area of interest,
a multi-user terminal comprising a unit (8) for communicating by optical link, and acquisition means (7) for acquiring a first communication with a first terminal suitable for detecting during the first communication the movement of the first user terminal in the area of interest,
the communication unit making the first communication between the multi-user terminal and the user terminal on a first communication channel (81),
**characterized in that** the acquisition means are suitable for detecting a communication request originating from the second user terminal during the first communication,
and **in that** the multi-user terminal comprises user terminal assignment means for assigning a second communication with the second terminal on at least one second communication channel (82).

28. Communication system according to Claim 27, in which the acquisition means comprise an angular difference measuring unit suitable for estimating an angular difference between the first terminal and the second terminal over time, the second channel comprising means of neutralizing the angular difference.

29. Communication system according to Claim 27 or Claim 28, in which
the multi-user terminal comprises means of monitoring the area of interest (11);
the user terminal comprises a beacon transmitting a first orientable beam to sweep a cone of uncertainty;
the multi-user terminal comprises means of detecting a first signalling beam from the user terminal and a beacon (6) suitable for transmitting a second signalling beam towards the user terminal;
the user terminal comprises means of detecting the second signalling beam.

30. Communication system according to any one of Claims 27 to 29, in which the multi-user terminal is positioned on a geostationary satellite or on an airborne platform.

31. Communication system according to any one of Claims 27 to 30, in which one of the user terminals is positioned on a satellite in low earth orbit.

32. Communication system according to any one of Claims 27 to 31, in which one of the user terminals is positioned on an aircraft flying over the area of interest.

33. Communication system according to any one of Claims 27 to 32, in which each communication channel is defined by a specific wavelength, the multi-user terminal comprising a beam splitter (811) suitable for dividing up a received beam according to each of the wavelengths corresponding to each channel and transmitting it over each of the channels,
each user terminal being suitable for transmitting and receiving by means of a beam with the wavelength corresponding to the communication channel to which it has been assigned.

34. Communication system according to any one of Claims 27 to 33, in which each communication channel is defined by a specific wave polarization, the multi-user terminal comprising a beam splitter (811) suitable for dividing up a received beam according to each of the wavelengths corresponding to each channel and transmitting it over each of the channels,
each user terminal being suitable for transmitting and receiving by means of a beam with the wave polarization corresponding to the communication channel to which it has been assigned.

35. Communication system according to any one of Claims 27 to 34, in which the communication channels are transmitted one after the other, the transition from one channel to another being made after a determined time.

36. Communication system according to any one of Claims 27 to 34, in which the communication channels are transmitted one after the other, the transition from the first channel to the second being made at the end of the first communication.

37. Satellite comprising a user terminal comprising a beacon for transmitting a signalling beam, and suitable for forming with a multi-user terminal a communication system according to any one of Claims 27 to 36.

## Patentansprüche

1. Mehrbenutzerendgerät, das eine Einheit (8) zur Kommunikation durch optische Verbindung mit einer Mehrzahl an Endgeräten in einem Bereichen von Interesse, der durch das Mehrbenutzerendgerät abgetastet wird, und eine Erlangungseinrichtung (7) zum Erlangen einer ersten Kommunikation mit einem ersten Benutzerendgerät, die angepasst ist, um im Laufe der ersten Kommunikation die Verschiebung des ersten Benutzerendgerätes in dem Bereich von Interesse zu erfassen, aufweist,
wobei die Kommunikationseinheit (8) die erste Kommunikation zwischen dem Mehrbenutzerendgerät und dem ersten Benutzerendgeräte auf einem ersten Kommunikationsweg (81) vornimmt,
**dadurch gekennzeichnet, dass** die Erlangungseinrichtung (7) angepasst ist, eine Kommunikationsanforderung von einem zweiten Endgerät her zu erfassen, wenn das erste Mehrbenutzerendgerät mit dem ersten Endgerät in Kommunikation steht,
und dass das Mehrbenutzerendgerät eine Endgeräte-Zuweisungseinrichtung aufweist, um eine zweite Kommunikation mit dem zweiten Endgerät auf zumindest einem zweiten Kommunikationsweg (82, 83) zuzuweisen.

2. Mehrbenutzerendgerät nach Anspruch 1, wobei die Kommunikationseinheit (8) angepasst ist, um eine Vielzahl an Kommunikationen mit einer Vielzahl an Endgeräten auf einer Vielzahl von Kommunikationswegen (81, 82, 83) zu bewirken, wobei die Erlangungseinrichtung (7) angepasst ist, eine Kommunikationsanforderung von einem zusätzlichen Endgerät her zu erfassen, wenn sich das Benutzerendgerät mit der Vielzahl an Endgeräten in Kommunikation befindet.

3. Mehrbenutzerendgerät nach Anspruch 1 oder Anspruch 2, wobei die Erlangungseinrichtung eine Winkelmesseinrichtung (11) aufweist, die angepasst ist, um eine Winkeldifferenz zwischen dem ersten Benutzerendgerät und dem zweiten Benutzerendgerät im Laufe der Zeit abzuschätzen, wobei der zweite Weg eine Kompensationseinrichtung für die Winkeldifferenz aufweist.

4. Mehrbenutzerendgerät nach einem der vorhergehenden Ansprüche, wobei jeder Kommunikationsweg durch eine Eigenwellenlänge definiert ist, wobei das Mehrbenutzerendgerät einen Strahlenbündelteiler (811) aufweist, der angepasst ist, um ein aufgenommenes Strahlenbündel in Abhängigkeit von jeder der Wellenlängen mit Entsprechung zu jedem Weg aufzuteilen und um dieses über jeden der Wege zu übertragen.

5. Mehrbenutzerendgerät nach einem der vorhergehenden Ansprüche, wobei jeder Kommunikationsweg durch eine Eigenwellenpolarisierung definiert ist, wobei das Mehrbenutzerendgerät einen Strahlenbündelteiler (811) aufweist, der angepasst ist, um ein aufgenommenes Strahlenbündel in Abhängigkeit von der Polarisierung mit Entsprechung zu der Welle bei jedem Weg aufzuteilen und um dieses über jeden der Wege zu übertragen.

6. Mehrbenutzerendgerät nach einem der vorhergehenden Ansprüche, bei dem die Kommunikationswege einer nach dem anderen übertragen werden, wobei der Übergang von einem Weg zum anderen am Ende einer bestimmten Zeit vorgenommen wird.

7. Mehrbenutzerendgerät nach einem der Ansprüche 1 bis 5, bei dem die Kommunikationswege einer nach dem anderen übertragen werden, wobei der Übergang vom ersten Weg zum zweiten am Ende der ersten Kommunikation vorgenommen wird.

8. Mehrbenutzerendgerät nach einem der vorhergehenden Ansprüche, das ferner einen Mechanismus (9) zur Endausrichtung aufweist, der angepasst ist, um das erste Benutzerendgerät während der ersten Kommunikation zu verfolgen, wobei eine Position des ersten Endgerätes als Referenzposition für die anderen Kommunikationswege dient.

9. Mehrbenutzerendgerät nach einem der vorhergehenden Ansprüche, wobei jeder Kommunikationsweg einen Empfänger (814) für das Aufnehmen von Daten entsprechend einer aufsteigenden Richtung, einen Sender (813) zum Senden von Daten in einer abfallenden Richtung, einen Strahlenbündelteiler (815) zum Teilen des ausgesendeten Strahlenbündels aus dem aufgenommenen Strahlenbündel und einen Ausrichtmechanismus (812), der für den Weg geeignet ist, aufweist, wobei der Ausrichtmechanismus in Bezug auf den Strahlenbündelteiler unterhalb angeordnet ist, wenn die abfallende Richtung berücksichtigt wird.

10. Mehrbenutzerendgerät nach Anspruch 9, wenn dieser von Anspruch 3 abhängt, wobei der Ausrichtmechanismus (812) von jedem Weg in Abhängigkeit von der Winkeldifferenz zwischen dem ersten Nutzerendgerät und einem Nutzerendgerät, das dem berücksichtigten Weg entspricht, gesteuert wird.

11. Mehrbenutzerendgerät nach Anspruch 10, wobei für ein bestimmtes Benutzerendgerät, das eine bestimmte Geschwindigkeit hat, das Senden von Daten und das Aufnehmen von Daten auf zwei unterschiedlichen Wegen vorgenommen werden, wobei eine Steuerungsdifferenz von jeweiligen Ausrichtmechanismen der zwei berücksichtigten Wege von der Geschwindigkeit des bestimmten Benutzerendgerätes abhängt.

12. Mehrbenutzerendgerät nach einem der vorhergehenden Ansprüche, wobei die Erlangungseinrichtung eine Matrix-Erfassungseinrichtung mit der CMOS-Technologie vom Typ Aktivpixelsensor (Active Pixel Sensor, APS) aufweist, die angepasst ist, um Signale von einem Benutzerendgerät her im Laufe der Kommunikation zu erfassen.

13. Satellit mit einem Mehrbenutzerendgerät nach einem der vorhergehenden Ansprüche.

14. Auf dem Luftweg beförderbare bzw. beförderte Plattform mit einem Mehrbenutzerendgerät nach einem der Ansprüche 1 bis 12.

15. Verfahren zur Kommunikation über optische Verbindung zwischen einem Mehrbenutzerendgerät, wobei das Verfahren die Schritte hat, die aufweisen:
(a) Herstellen einer Kommunikation mit einem ersten Benutzerendgerät,
(b) Sicherstellen der ersten Kommunikation durch optische Verbindung auf einem ersten Kommunikationsweg zwischen dem Mehrbenutzerendgerät und dem Benutzerendgerät, während im Laufe der ersten Kommunikation die Verschiebung des ersten Endgerätes in einem Bereich von Interesse erfasst wird,
**dadurch gekennzeichnet, dass** das Verfahren ferner Schritte hat, die aufweisen
(c) Erfassen einer Kommunikationsanforderung von einem zweiten Nutzerendgerät her gleichzeitig mit Schritt (b),
(d) Zuweisen einer zweiten Kommunikation zwischen dem Mehrbenutzerendgerät und dem zweiten Benutzerendgerät auf zumindest einem zweiten Kommunikationsweg.

16. Verfahren nach Anspruch 15, bei dem im Laufe von Schritt (a) eine Winkeldifferenz zwischen dem ersten Benutzerendgerät und dem zweiten Benutzerendgerät im Laufe der Zeit geschätzt wird und die Winkeldifferenz auf dem zweiten Weg ausgeglichen wird.

17. Verfahren nach Anspruch 15 oder 16, wobei das Mehrbenutzerendgerät an einem geostationären Satelliten oder einer auf dem Luftweg beförderbaren bzw. beförderten Plattform angebracht wird.

18. Verfahren nach einem der Ansprüche 15 bis 17, wobei für jeden Kommunikationsweg eine Eigenwellenlänge definiert wird und wobei ein aufgenommenes Strahlenbündel in Abhängigkeit von jeder der Wellenlängen mit Entsprechung zu jedem Weg aufgeteilt wird und dieses auf jedem der Wege übertragen wird.

19. Verfahren nach einem der Ansprüche 15 bis 18, wobei für jeden Kommunikationsweg eine Eigenwellenpolarisierung definiert wird und wobei ein aufgenommenes Strahlenbündel in Abhängigkeit von jeder der Wellenpolarisierungen mit Entsprechung zu jedem Weg aufgeteilt wird und diese auf jedem der Wege übertragen wird.

20. Verfahren nach einem der Ansprüche 15 bis 19, wobei für jeden Kommunikationsweg eine Eigenwellenpolarisierung definiert wird und ein aufgenommenes Strahlenbündel in Abhängigkeit von jeder der Wellenpolarisierungen mit Entsprechung zu jedem Weg aufgeteilt wird und dieses auf jedem der Wege übertragen wird.

21. Verfahren nach einem der Ansprüche 15 bis 20, wobei die Kommunikationswege einer nach dem anderen übertragen werden und der Übergang von einem Weg zum anderen am Ende einer bestimmten Zeit vorgenommen wird.

22. Verfahren nach einem der Ansprüche 15 bis 21, wobei die Kommunikationswege einer nach dem anderen übertragen werden und der Übergang vom ersten Weg zum zweiten am Ende der ersten Kommunikation vorgenommen wird.

23. Verfahren nach einem der Ansprüche 15 bis 22, wobei im Laufe von Schritt (b) das erste Benutzerendgerät während der ersten Kommunikation verfolgt wird, wobei eine Position des ersten Endgerätes als Referenzposition für die anderen Kommunikationswege dient.

24. Verfahren nach einem der Ansprüche 15 bis 23, wenn dieser von Anspruch 16 abhängt, wobei ein Ausrichtmechanismus (812) von jedem Weg in Abhängigkeit von der Winkeldifferenz zwischen dem ersten Benutzerendgerät und einem Benutzerendgerät, das dem berücksichtigten Weg entspricht, gesteuert wird.

25. Verfahren nach Anspruch 24, wobei für ein bestimmtes Benutzerendgerät, das eine bestimmte Geschwindigkeit hat, zwei unterschiedliche Wege für die Datenaussendung bzw. den Datenempfang zugewiesen werden und die jeweiligen Ausrichtmechanismen (812) von zwei berücksichtigten Wegen in unterschiedlicher Weise in Abhängigkeit von der Geschwindigkeit des bestimmten Benutzerendgerätes gesteuert werden.

26. Verfahren nach einem der Ansprüche 15 bis 25, wobei Schritt (a) die folgenden Unterschritte aufweist:
(a) das Mehrbenutzerendgerät tastet den Bereich von Interesse ab,
(a2) das Benutzerendgerät streicht mit einem ersten Signalisierungsstrahlenbündel über einen Unsicherheitskegel,
(a3) das Mehrbenutzerendgerät erfasst das erste Signalisierungsstrahlenbündel des Benutzerendgerätes und sendet ein zweites Signalisierungsstrahlenbündel in Richtung des Benutzerendgerätes aus,
(a4) das Benutzerendgerät erfasst das zweite Signalisierungsstrahlenbündel, hält das erste Signalisierungsstrahlenbündel an und beginnt die Kommunikation in Richtung des Mehrbenutzerendgerätes,
(a5) das Mehrbenutzerendgerät hält das zweite Signalisierungsstrahlbündel an und beginnt die Kommunikation in Richtung des Benutzerendgerätes.

27. System zur Kommunikation durch optische Verbindung, das ein erstes Benutzerendgerät und ein zweites Benutzerendgerät in einem Bereich von Interesse aufweist,
wobei ein Mehrbenutzerendgerät eine Einheit (8) zur Kommunikation durch optische Verbindung und eine Erlangungseinrichtung (7) zum Erlangen einer ersten Kommunikation mit einem ersten Endgerät, die angepasst ist, im Laufe der ersten Kommunikation die Verschiebung des ersten Benutzerendgerätes in dem Bereich von Interesse zu erfassen, aufweist,
wobei die Kommunikationseinheit die erste Kommunikation zwischen dem Mehrbenutzerendgerät und dem Benutzerendgerät auf einem ersten Kommunikationsweg (81) vornimmt,
**dadurch gekennzeichnet, dass** die Erlangungseinrichtung angepasst ist, eine Kommunikationsanforderung von dem zweiten Benutzerendgerät her im Lauf der ersten Kommunikation zu erfassen,
und dass das Mehrbenutzerendgerät eine Benutzerendgerät-Zuweisungseinrichtung aufweist, um eine zweite Kommunikation mit dem zweiten Endgerät auf zumindest einem zweiten Kommunikationsweg (82) zuzuweisen.

28. Kommunikationssystem nach Anspruch 27, wobei die Erlangungseinrichtung eine Einheit zum Messen der Winkeldifferenz aufweist, die angepasst ist, um eine Winkeldifferenz zwischen dem ersten Endgerät und dem zweiten Endgerät im Laufe der Zeit abzuschätzen, wobei der zweite Weg eine Einrichtung zum Ausgleich der Winkeldifferenz aufweist.

29. Kommunikationssystem nach Anspruch 27 oder Anspruch 28, wobei
das Mehrbenutzerendgerät eine Einrichtung zur Überwachung des Bereiches von Interesse (11) aufweist,
wobei das Benutzerendgerät eine Markierung aufweist, die ein erstes ausrichtbares Strahlenbündel aussendet, um einen Unsicherheitskegel zu überstreichen,
wobei das Mehrbenutzerendgerät eine Einrichtung zum Erfassen eines ersten Signalisierungsstrahlenbündels des Benutzerendgerätes und eine Markierung (6) aufweist, die angepasst ist, um ein zweites Signalisierungsstrahlenbündel in Richtung des Benutzerendgerätes auszusenden,
wobei das Benutzerendgerät eine Einrichtung zum Erfassen des zweiten Signalisierungsstrahlenbündels aufweist.

30. Kommunikationssystem nach einem der Ansprüche 27 bis 29, wobei das Mehrbenutzerendgerät an einem geostationären Satelliten oder einer auf dem Luftweg beförderbaren bzw. beförderten Plattform angeordnet ist.

31. Kommunikationssystem nach einem der Ansprüche 27 bis 30, wobei eines der Benutzerendgeräte an einem Satelliten im unteren Orbit angeordnet ist.

32. Kommunikationssystem nach einem der Ansprüche 27 bis 31, wobei eines der Benutzerendgeräte an einem fliegenden Luftfahrzeug oberhalb des Bereiches von Interesse angeordnet ist.

33. Kommunikationssystem nach einem der Ansprüche 27 bis 32, wobei jeder Kommunikationsweg durch eine Eigenwellenlänge definiert ist, wobei das Mehrbenutzerendgerät einen Strahlenbündelteiler (811) aufweist, der angepasst ist, um ein aufgenommenes Strahlenbündel in Abhängigkeit von jeder der Wellenlängen mit Entsprechung zu jedem Weg zu unterteilen und dieses auf jedem der Wege zu übertragen,
wobei jedes Benutzerendgerät angepasst ist, um mittels eines Strahlenbündels mit der Wellenlänge, die dem Kommunikationsweg entspricht, auf dem dieses zugewiesen wurde, auszusenden und zu empfangen.

34. Kommunikationssystem nach einem der Ansprüche 27 bis 33, wobei jeder Kommunikationsweg durch eine Eigenwellenpolarisierung definiert ist, wobei das Mehrbenutzerendgerät einen Strahlenbündelteiler (811) aufweist, der angepasst ist, um ein aufgenommenes Strahlenbündel in Abhängigkeit von jeder der Wellenlängen mit Entsprechung zu jedem Weg aufzuteilen und dieses auf jedem der Wege zu übertragen,
wobei jedes Benutzerendgerät angepasst ist, um mittels eines Strahlenbündels mit der Wellenpolarisierung mit Entsprechung zu dem Kommunikationsweg, auf dem dieses zugewiesen wurde, auszusenden und zu empfangen.

35. Kommunikationssystem nach einem der Ansprüche 27 bis 34, wobei die Kommunikationswege einer nach dem anderen übertragen werden, wobei der Übergang von einem zum anderen am Ende einer bestimmten Zeit vorgenommen wird.

36. Kommunikationssystem nach einem der Ansprüche 27 bis 34, wobei die Kommunikationswege einer nach dem anderen übertragen werden, wobei der Übergang von dem ersten Weg zum zweiten am Ende der ersten Kommunikation vorgenommen wird.

37. Satellit mit einem Benutzerendgerät, das eine Markierung zum Aussenden eines Signalisierungsstrahlenbündels aufweist und angepasst ist, um mit einem Mehrbenutzerendgerät ein Kommunikationssystem nach einem der Ansprüche 27 bis 36 auszubilden.
